# EUROPÄISCHE PATENTSCHRIFT

(11) **EP 3 479 105 B1**
(45) Veröffentlichungstag und Bekanntmachung des Hinweises auf die Patenterteilung: **07.06.2023**
(21) Anmeldenummer: 17710946.9
(22) Anmeldetag: 16.03.2017
(51) Int. Cl.: B07C 5/36, G01N 21/90, B07C 5/02, B07C 5/12, B07C 5/34, B07C 5/342, B07C 5/38, B65G 47/90

(54) **INSPEKTIONSVORRICHTUNG UND -VERFAHREN ZUR INSPEKTION VON IN EINEM LEERGUTKASTEN ANGEORDNETEN BEHÄLTERN**
INSPECTION DEVICE AND METHOD FOR INSPECTING CONTAINERS LOCATED IN A CRATE FOR EMPTY CONTAINERS
DISPOSITIF ET PROCÉDÉ D'INSPECTION DE RÉCIPIENTS DISPOSÉS DANS UNE CAISSE DE BOUTEILLES CONSIGNÉES

(30) Priorität: 30.06.2016 DE 102016211910
(43) Veröffentlichungstag der Anmeldung: 08.05.2019
(73) Patentinhaber: Krones AG, 93073 Neutraubling (DE)
(72) Erfinder: SCHAEFER, Heiner, 93073 Neutraubling (DE); HUBER, Wolfgang, 93073 Neutraubling (DE); ESCHLBECK, Richard, 93073 Neutraubling (DE)
(74) Vertreter: Grünecker Patent- und Rechtsanwälte PartG mbB
(86) Internationale Anmeldenummer: PCT/EP2017/056221
(87) Internationale Veröffentlichungsnummer: WO 2018/001579

(56) Entgegenhaltungen:
- EP-A2- 0 569 689
- EP-A2- 1 754 549
- WO-A1-2016/020683
- DE-A1- 1 816 505
- DE-A1- 10 065 290
- DE-A1- 10 353 109
- DE-A1-102004 047 826
- DE-A1-102005 014 300
- DE-B- 1 204 130
- DE-T2-602005 005 686
- US-A- 3 934 920

## Beschreibung

Die Erfindung betrifft eine Inspektionsvorrichtung und -verfahren zur Inspektion von in einem Leergutkasten angeordneten Behältern mit den Merkmalen des Oberbegriffs von Anspruch 1 bzw. 7 und eine Flanschensortiermaschine zum Sortieren von in einem Leergutkasten angeordneten Behältern.

Üblicherweise werden Behälter, insbesondere Flaschen, in Leergutkästen vom Getränkelieferanten zum Geschäft und von dort zum Endabnehmer transportiert. Die Behälter werden nach Gebrauch vom Endabnehmer als Leergut in den Leergutkästen zur Wiederverwertung zurücktransportiert. Üblicherweise werden jedoch vom Endabnehmer Behälter verschiedenen Typs bzw. für verschiedene Produkte in einen einzigen Leergutkasten abgestellt und so an das Geschäft zurückgegeben. Daher ist es vor einem erneuten Befüllen notwendig, die Behälter sortieren.

Zu diesem Zweck sind Flaschensortiermaschinen mit Inspektionsvorrichtungen bekannt, mit denen die Behälter im Leergutkasten mit einem optischen Inspektionssystem erfasst werden, beispielsweise von oben mit einer Kamera. Aus den Bildern werden Behältermerkmale ermittelt, so dass der Typ, das Produkt und/oder der Lieferant zugeordnet werden kann. Nachteilig dabei ist, dass sich auf den Schultern der Behälter Schmutzablagerungen befinden können, die die Erkennung erschweren. Ferner kann die besonders charakteristische Seitenkontur der Behälter nur schwer oder gar nicht erfasst werden.

Aus der DE 10 2005 014300 A1 ist eine Sortiervorrichtung und ein Verfahren zur Erkennung von Leerflaschen bekannt, wobei die Flaschen in die Packtulpen eines Packkopfs aufgenommen und aus dem Kasten angehoben werden. Anschließend werden die Packtulpen derart gespreizt, dass zwischen den einzelnen Flaschenreihen Gassen gebildet werden, um die Flaschen von dort mittels Kameras über ihre gesamte freie Höhe zu erfassen.

Nachteilig dabei ist, dass beispielsweise bei Kästen mit sechs Flaschenreihen entsprechend fünf Gassen mit Kameratechnik ausgestattet werden müssen. Demnach ist diese Sortiervorrichtung recht aufwändig aufgebaut.

Die WO 2016/020683 A1 offenbart ein optisches Inspektionssystem.

Die EP 1 754 549 A2 offenbart ein Verfahren und eine Anlage zum Sortieren von Flaschen.

Die DE 60 2005 005 686 T2 offenbart eine Vorrichtung zum Sortieren und Gruppieren von Gegenständen und Behältern.

Aufgabe der vorliegenden Erfindung ist daher, eine Inspektionsvorrichtung zur Inspektion von in einem Leergutkasten angeordneten Behältern bereitzustellen, mit der die Behälter weniger aufwändig inspiziert und dennoch sicher erkannt werden können.

Zur Lösung dieser Aufgabenstellung stellt die Erfindung eine Inspektionsvorrichtung zur Inspektion von in einem Leergutkasten angeordneten Behältern mit den Merkmalen des Anspruchs 1 bereit. Vorteilhafte Ausbildungen der Erfindung sind in den Unteransprüchen genannt.

Die mehreren in Greiferreihen angeordneten Greifer dienen zunächst dazu, die Behälter im Leergutkasten zu greifen und aus diesem herauszunehmen. Dadurch, dass die Greiferreihen in Längsrichtung gegeneinander verfahrbar ausgebildet sind, können die Reihen dann schubladenartig auseinandergefahren werden, so dass die jeweiligen Behälterreihen an den Greifern für das Inspektionssystem optisch zugänglich sind. Folglich verdecken sich die Behälterreihen bei der Inspektion nicht mehr gegeneinander und sind so auf der gesamten Höhe von der Seite und auch von unten her optisch zugänglich. Dadurch kann eine Inspektion der charakteristischen Seitenkontur und damit eine besonders zuverlässige Erkennung der Behältertypen erfolgen. Darüber hinaus können die gegeneinander verfahrbar ausgebildeten Greiferreihen dazu benutzt werden, die Behälter gegenüber dem optischen Inspektionssystem zu verfahren und so die Behälter jeweils in den Meßbereich des optischen Inspektionssystems zu verfahren. Folglich kann das optische Inspektionssystem weniger aufwändig aufgebaut werden, um alle Flaschen an den Greiferreihen zu erfassen. Darüber hinaus können Antriebe zum Verfahren der Greiferreihen in Reihenlängsrichtung besonders einfach aufgebaut sein. Folglich wird mit der Erfindung eine Inspektionsvorrichtung bereitgestellt, die eine zuverlässige Inspektion der Behälter erlaubt und dennoch einfacher aufgebaut ist.

Die Inspektionsvorrichtung kann in einer Leergut- und/oder Getränkeverarbeitungsanlage angeordnet sein, die vorzugsweise dazu ausgebildet ist, die Leergutkästen und die darin enthaltenen Flaschen zu sortieren, zu reinigen und/oder wieder zu befüllen. Denkbar ist, dass die Inspektionsvorrichtung in einer Flaschensortiermaschine angeordnet ist, die zum Sortieren von in einem Leergutkasten angeordneten Behältern ausgebildet ist. Die Flaschensortiermaschine kann mehrere Fördereinrichtungen zum Zuführen und Abführen der Leergutkästen in die Flaschensortiermaschine umfassen. Darüber hinaus kann die Flaschensortiermaschine mit einer Sortiereinrichtung der mit der Inspektionsvorrichtung inspizierten Behälter ausgebildet sein. Die Inspektionsvorrichtung kann beispielsweise über ein Datenleitung mit der Sortiereinrichtung, der Flaschensortiermaschine, der Leergut- und/oder Getränkeverarbeitungsanlage verbunden sein, um eine Zuordnung der Behälter zu einem oder mehreren Behältertypen zu übermitteln.

Die Leergutkästen können dazu ausgebildet sein, mehrere Behälter mit von Fächerwänden und einer Bodenebene gebildeten Fächern aufzunehmen. Beispielsweise können die Leergutkästen ein Raster aus 2 x 3, 3 x 4, 4 x 5, 4 x 6 oder 5 x 6 Fächern zur Aufnahme der Behälter aufweisen. Denkbar ist ein rechteckiges oder hexagonales Raster der Fächer. Ferner kann die Inspektionsvorrichtung zur Inspektion von Leergutkästen mit verschiedenen Fächeranordnungen ausgebildet sein.

Die Behälter können dazu vorgesehen sein, Getränke, Hygieneartikel, Pasten, chemische und/oder biologische und/oder pharmazeutische Produkte aufzunehmen. Mit Behältern können hier Flaschen gemeint sein, insbesondere Kunststoff- oder Glasflaschen. Denkbar sind jedoch auch Dosen. Bei den Kunststoffflaschen kann es sich im Speziellen um PET-, PEN-, HD-PE- oder PP-Flaschen handeln. Ebenso kann es sich um biologisch abbaubare Behälter handeln, deren Hauptbestandteil aus nachwachsenden Rohstoffen wie z.B. Zuckerrohr, Weizen, Holz bzw. Holzfasern oder Mais bestehen.

Der Kopf kann mit einem Raster von Greifern ausgebildet sein, das dem Raster der Fächer des Leergutkastens entspricht. Beispielsweise kann der Kopf zwei Greiferreihen mit jeweils drei Greifern, drei Greiferreihen mit jeweils vier Greifern, vier Greiferreihen mit jeweils drei Greifern, vier Greiferreihen mit jeweils fünf Greifern, fünf Greiferreihen mit jeweils vier Greifern, fünf Greiferreihen mit jeweils fünf oder sechs Greifern oder sechs Greiferreihen mit jeweils fünf Greifern aufweisen. Denkbar sind auch beliebige andere Raster. Die Greifer bzw. die Greiferreihen können am Kopf ein regelmäßiges Raster bilden. Der Kopf kann einen Träger, einen Rahmen, eine Platte und/oder ein Gehäuse umfassen, an denen die Greiferreihen verfahrbar angeordnet sind. Denkbar ist, dass die Greiferreihen jeweils einen verfahrbaren Träger umfassen, an dem die zugehörigen Greifer angeordnet sind. Dadurch sind alle Greifer einer Reihe gemeinsam mit dem Träger verfahrbar. Beispielsweise kann der Kopf ein Rahmenelement aufweisen, an dem zwei, drei, vier, fünf, sechs oder noch mehr verfahrbare Träger mit jeweils mehreren Greifern angeordnet sind. Die Träger können am Kopf parallel zueinander angeordnet sein, um die Greiferreihen in Reihenlängsrichtung gegeneinander zu verfahren. Denkbar ist, dass die Greiferreihen, insbesondere die Träger, mit einem Antrieb, wie beispielsweise einem Linearmotor, einem Pneumatik- oder Hydraulikzylinder gegeneinander verfahrbar sind.

Mit Reihenlängsrichtung kann die Richtung gemeint sein, in der die Greifer jeweils an einer Greiferreihe angeordnet sind. Mit einer Behälterreihe können mehrere Behälter gemeint sein, die bei der Inspektion von einer bestimmten Greiferreihe mit den Greifern gegriffen und aus dem Leergutkasten herausgenommen werden.

Die Greifer können tulpen- oder glockenartig ausgebildet sein, um die Behältermündung zu greifen bzw. aufzunehmen. Beispielsweise können die Greifer die Behältermündungen mittels eines Unterdrucks aufnehmen. Ebenso ist denkbar, dass die Greifer mit bewegbaren Greifelementen ausgebildet sind, um die Behältermündung, insbesondere deren Rand, zu greifen.

Das optische Inspektionssystem kann eine oder mehrere Kameras umfassen. Die Kamera bzw. die mehreren Kameras können unabhängig voneinander jeweils als Farbkamera und/oder S/W-Kamera ausgebildet sein. Vorzugsweise können die Kameras jeweils einen CCD- oder einen CMOS-Bildsensor und ein Objektiv umfassen. Das optische Inspektionssystem kann zusätzlich oder alternativ einen 3D-Sensor und/oder einen Farbsensor umfassen. Ferner kann das optische Inspektionssystem mit einer Bildverarbeitungseinheit zur Verarbeitung der Bilder von den Behältern ausgebildet oder damit verbunden sein. Denkbar ist, dass das optische Inspektionssystem dazu ausgebildet ist, Bilder der herausgefahrenen Behälter aufzunehmen und/oder wenigstens ein Behältermerkmal zu bestimmen. Das Behältermerkmal kann eine Behälterfarbe, eine Formkontur, eine Seitenkontur, eine 3D-Formkontur, einen oder mehrere 3D-Oberflächenpunkte, einen Behälterdurchmesser, ein Bodenmerkmal, einen Typ, Größe und/oder Ort eines Embossings, einer Gravur und/oder eines Etiketts umfassen. Das Behältermerkmal kann ebenso einen 2-D Matrix Codes, einen Barcode und/oder Einweg- bzw. Mehrwegmarkierung umfassen. Die Behältermerkmale können vorzugsweise dazu vorgesehen sein, den Typ, das Produkt und/oder einen Lieferanten des Behälters zuzuordnen. Die Inspektionsvorrichtung kann mit einer Firmendatenbank und/oder einer firmenübergeordneten Datenbank verbunden sein, in der Abgleichdaten von Behältertypen, insbesondere Kenngrößen der Behältermerkmale abgelegt sind. Dadurch können die Behältermerkmale mit den Abgleichdaten verglichen und der Behältertyp erkannt werden.

Vorzugsweise können die Kameras jeweils einer Greiferreihe zugeordnet sein. Dadurch ist es möglich, die Behälter an einer Greiferreihe jeweils in das Blickfeld der zugeordneten Kamera zu verfahren. Demnach können ein Teil oder alle Greiferreihen dazu ausgebildet sein, die von den Greifern aufgenommenen Behälter einzeln oder in Gruppen in das Blickfeld der zugeordneten Kamera zu verfahren. Sind an dem Kopf maximal vier Greiferreihen angeordnet, so können zwei der Reihen um eine halbe Reihenlänge in die eine Richtung und die zwei anderen Reihen um eine halbe Reihenlänge in der entgegengesetzten Richtung verfahren werden, um den optischen Zugang für die jeweils zugeordneten Kameras zu schaffen. Sind fünf und mehr Greiferreihen an dem Kopf angeordnet, so werden die Reihen jeweils um eine ganze Reihenlänge verfahren, um den optischen Zugang für die jeweils zugeordneten Kameras zu schaffen.

Das optische Inspektionssystem kann zur Beleuchtung eine Beleuchtungseinrichtung umfassen. Beispielsweise kann die Beleuchtungseinrichtung wenigstens eine Leuchttafel umfassen, die derart angeordnet ist, dass damit wenigstens ein Behälter, mehrere oder alle Behälter an einer Greiferreihe gegenüber einer Kamera hinterleuchtet werden können. Damit kann eine Durchlichtinspektion der Behälter durchgeführt werden. Ebenso ist denkbar, dass die Leuchttafel zwischen zwei Greiferreihen angeordnet ist und beidseitig Licht abstrahlt. Dadurch können zwei oder mehrere gegenüberliegende Behälter hinterleuchtet werden. Ferner kann die Beleuchtungseinrichtung ein oder mehrere Ringlichter umfassen, die an einer oder mehreren Kameras als Ring um das jeweilige Objektiv angeordnet sind. Dadurch ist die Lichtquelle zur Auflichtbeleuchtung ausgebildet und es entsteht kein Schattenwurf. Die Beleuchtungseinrichtung kann als Leuchtmittel eine oder mehrere LEDs umfassen. Es sind aber auch andere Leuchtmittel wie Glühbirnen, Gasentladungslampen und/oder Leuchtstoffröhren denkbar.

Der Kopf kann mittels einer Transporteinrichtung entlang einer Transportrichtung verfahrbar ausgebildet sein. Durch die Transporteinrichtung ist es möglich, den Kopf mit den daran angeordneten Greifern synchron zu einer Transportbewegung der Behälter im Leergutkasten zu verfahren. Beispielsweise kann der Inspektionsvorrichtung eine Fördereinrichtung zum Fördern des Leergutkastens zugeordnet sein und der Kopf mittels der Transporteinrichtung synchron zu einer Förderbewegung der Fördereinrichtung verfahrbar sein. Folglich muss der Leergutkasten nicht erst angehalten werden, um die Behälter zu greifen und aus dem Leergutkasten herauszunehmen.

Denkbar ist auch, dass die Transporteinrichtung dazu ausgebildet ist, den Kopf zwischen wenigstens zwei Fördereinrichtungen für den Leergutkasten und/oder für die Behälter zu verfahren. Beispielsweise kann eine erste Fördereinrichtung zum Zuführen des Leergutkastens an die Inspektionsvorrichtung und eine oder mehrere Fördereinrichtungen zum Abführen des Leergutkastens und/oder der Behälter von der Inspektionsvorrichtung ausgebildet sein. Demnach können also die Behälter nach der Inspektion mit dem Kopf und der Transporteinrichtung auf einem oder mehreren abführenden Fördereinrichtungen abgestellt werden. Anstatt einer oder mehrere der abführenden Fördereinrichtung kann ein Flaschentisch angeordnet sein.

Die Greiferreihen können schräg, vorzugsweise senkrecht zur Transportrichtung gegeneinander verfahrbar ausgebildet sein, insbesondere wobei die Kameras am Kopf angeordnet sind. Dadurch ist die Verfahrbewegung der Greiferreihen unabhängig von der Transportbewegung des Kopfs und damit entkoppelt. Durch die Anordnung der Kameras am Kopf ist zudem keine Relativbewegung durch den Transport des Kopfs möglich. Folglich entsteht in den Kamerabildern keine Bewegungsunschärfe und die Behälter können so besonders zuverlässig inspiziert werden. Die Kameras können jeweils seitlich an der zugeordneten Greiferreihe angeordnet sein. Die Behälter können einzeln oder in Gruppen mittels der zugeordneten Greiferreihe in das Blickfeld der Kamera verfahrbar sind. Gruppen kann hier bedeuten, dass eine Gruppe zwei, drei oder noch mehr Behälter umfasst. Die Kameras können beispielsweise über einen Tragarm oder dergleichen mit dem Kopf starr verbunden sein. Ebenso ist denkbar, dass die Kameras über Aktuatoren direkt mit dem Kopf verbunden und demgegenüber verfahrbar sind, beispielsweise in Richtung der Behälterlängsachsen. Ebenso können die Kameras mit den Aktuatoren vorzugsweise um die Behälterlängsachsen schwenkbar sein.

Die Greiferreihen können längs zur Transportrichtung verfahrbar ausgebildet sein, insbesondere wobei die Kameras an der Inspektionsvorrichtung stationär oder am Kopf angeordnet sind. Dadurch ist es möglich, die Bewegung der Behälter gegenüber dem optischen Inspektionssystem mit der Transportbewegung des Kopfs zu koppeln. Die Kameras können an der Inspektionsvorrichtung jeweils seitlich an der zugeordneten Greiferreihe derart stationär angeordnet sein, dass die Behälter einzeln oder in Gruppen mittels der zugeordneten Greiferreihe und/oder der Transporteinrichtung in das Blickfeld der Kamera verfahrbar sind. Stationär kann hier bedeuten, dass die Kameras feststehend mit einer Standbasis der Inspektionsvorrichtung verbunden sind.

Die Greifer können drehbar ausgebildet sein, um die Oberflächen der Behälter in Behälterumfangsrichtung an mehreren Stellen zu inspizieren. Dadurch ist es möglich, durch Drehen die Behälter vollumfänglich zu inspizieren. Beispielsweise kann ein Antrieb dazu vorgesehen sein, die Greifer zu drehen.

Darüber hinaus stellt die Erfindung zur Lösung der Aufgabenstellung ein Inspektionsverfahren zur Inspektion von in einem Leergutkasten angeordneten Behältern nach dem Anspruch 7 bereit. Vorteilhafte Ausführungsformen sind in den Unteransprüchen genannt.

Dadurch, dass die Behälter mit dem Kopf und den in mehreren Greiferreihen angeordneten Greifern gegriffen und aus dem Leergutkasten herausgenommen werden, sind diese zur Inspektion besser zugänglich. Da zudem die Greiferreihen in Reihenlängsrichtung gegeneinander verfahren werden, können die Reihen schubladenartig auseinandergefahren werden, so dass die jeweiligen Behälterreihen an den Greifern für das Inspektionssystem optisch zugänglich sind. Dadurch können eine Inspektion der charakteristischen Seitenkontur und dadurch eine besonders zuverlässige Erkennung der Behältertypen erfolgen. Zudem ist es auch möglich, die Behälter von unten her und damit den Flaschenboden zu inspizieren. Dadurch kann die charakteristische Seitenkontur besonders zuverlässig erkannt und darüber der Behältertyp bestimmt werden. Darüber hinaus kann das Verfahren der Greiferreihen dazu benutzt werden, die Behälter gegenüber dem optischen Inspektionssystem zu verfahren und die Behälter jeweils in den Meßbereich des optischen Inspektionssystems zu verfahren. Folglich kann das optische Inspektionssystem weniger aufwändig aufgebaut sein, um alle Flaschen an den Greiferreihen zu erfassen. Darüber hinaus können die Greiferreihen in Reihenlängsrichtung mit besonders einfachen Antrieben verfahren werden. Folglich stellt die Erfindung ein Inspektionsverfahren bereit, das eine zuverlässige Inspektion der Behälter erlaubt und dennoch weniger aufwändig ist.

Das Inspektionsverfahren nach einem der Ansprüche 7 - 14 kann mit einer Inspektionsvorrichtung nach einem der Ansprüche 1 - 6 durchgeführt werden. Zudem kann das Inspektionsverfahren die zuvor in Bezug auf die Inspektionsvorrichtung beschriebenen Merkmale sinngemäß einzeln oder in beliebigen Kombinationen umfassen.

Bei dem Inspektionsverfahren kann der Kopf entlang einer Transportrichtung mit einer Transporteinrichtung verfahren werden, wobei die Greiferreihen längs, schräg oder senkrecht zur Transportrichtung des Kopfs gegeneinander verfahren werden, vorzugsweise wobei die Greiferreihen während der Verfahrbewegung des Kopfs gegeneinander verfahren werden. Durch das Verfahren der Greiferreihen längs zur Transportrichtung des Kopfs kann die Transportbewegung dazu genutzt werden, um die mit den Greifern der Greiferreihen aufgenommenen Behälter in ein Inspektionsfeld des optischen Inspektionssystems zu verfahren. Werden die Greiferreihen senkrecht zur Transportrichtung des Kopfs gegeneinander verfahren, so ist die Bewegung der mit den Greifern gegriffenen Behälter von der Transporteinrichtung besser entkoppelt. Dadurch entsteht bei der Inspektion eine besonders geringe Bewegungsunschärfe. Dass die Greiferreihen während der Verfahrbewegung des Kopfs gegeneinander verfahren werden, kann hier bedeuten, dass beide Verfahrbewegungen gleichzeitig erfolgen. Alternativ ist denkbar, dass die beiden Verfahrbewegungen nur teilweise gleichzeitig oder auch nacheinander erfolgen. Beispielsweise könnte der Kopf zu einer Inspektionsposition verfahren werden und anhalten, wobei dann an der Inspektionsposition die Greiferreihen gegeneinander verfahren werden.

Die Behälter können zur Inspektion einzeln oder in Gruppen mit der jeweiligen Greiferreihe in das Blickfeld wenigstens einer Kamera gefahren werden. Folglich kann die Kamera die Behälter einzeln oder in Gruppen besonders hochauflösend erfassen. Das optische Inspektionssystem kann die wenigstens eine Kamera umfassen. Denkbar ist, dass jeder Kamera eine Greiferreihe zugeordnet ist, mit der die Behälter an den Greifern in das Blickfeld der Kamera gefahren werden. Dadurch können die Greiferreihen im Wesentlichen unabhängig voneinander verfahren werden.

Denkbar ist auch, dass zunächst zwei Greiferreihen entgegengesetzt zueinander verfahren werden und die Behälter von zwei jeweils einer Greiferreihe zugeordneten Kameras erfasst werden. Anschließend können dann zwei weitere Greifferreihen entgegengesetzt verfahren werden und mit denselben Kameras erfasst werden. Anders ausgedrückt, können zwei Greiferreihen nacheinander so verfahren werden, dass die damit aufgenommenen Behälter von einer beiden Reihen zugeordneten Kamera nacheinander inspiziert werden. Diese Vorgehensweise wird vorzugsweise bei einer Anordnung der Kameras am Kopf eingesetzt und/oder bei einem Verfahren der Greifferreihen schräg oder senkrecht zur Transportrichtung des Kopfs.

Ebenso ist denkbar, dass die Greiferreihen zunächst vollständig auseinandergefahren werden und dann mehrere oder alle Behälter einer Behälterreihe gleichzeitig mit den Kameras des optischen Inspektionssystems erfasst werden. Ebenfalls ist es möglich, dass die Greiferreihen längs zur Transportrichtung auseinandergefahren werden und währenddessen wenigstens ein Behälter einer Behälterreihe mit einer Kamera inspiziert wird. Vorzugsweise sind die Kameras beim Verfahren der Greiferreihen längs der Transportrichtung stationär an der Inspektionsvorrichtung angeordnet. Zudem kann die Inspektionsvorrichtung zur Durchleuchtung der Behälter wenigstens eine stationär an der Inspektionsvorrichtung angeordnete Lichttafel umfassen, die durch die Transportbewegung des Kopfs bei der Inspektion zwischen wenigstens zwei Behältern von verschiedenen Behälterreihen angeordnet ist. Denkbar ist, dass die entsprechenden Greiferreihen senkrecht auseinandergefahren werden, um Platz für die Lichttafel zu schaffen.

Die Greifer können jeweils bei der Inspektion gedreht werden, wobei die Oberfläche der Behälter in Behälterumfangsrichtung an mehreren Stellen inspiziert wird. Dadurch ist es möglich, die Behälter vollumfänglich zu erfassen und zu inspizieren.

Die Greiferreihen können gegeneinander auseinander- und dann wieder zusammengefahren werden und die Greifer damit korrespondierend so gedreht werden, dass jeweils unterschiedliche Behälterseiten inspiziert werden. Anders ausgedrückt werden die Greifer beim Auseinanderfahren so gedreht, dass eine erste Seite der Behälter dem optischen Inspektionssystem zugewandt ist und beim Zusammenfahren eine davon unterschiedliche andere Seite der Behälter. Dadurch kann das Inspektionsverfahren besonders effizient arbeiten. Beispielsweise können die Behälter in den Greifern beim Auseinanderfahren um 180° gedreht werden und beim Zusammenfahren um weitere 180° in derselben Drehrichtung. Ebenso ist denkbar, dass die Greiferreihen auseinandergefahren werden, die Behälter dann gedreht und dabei inspiziert werden und dann wieder zusammengefahren werden.

Die Greiferreihen können nach dem Herausnehmen der Behälter aus dem Leergutkasten in einem ersten Schritt vor und/oder während der Inspektion durch das optische Inspektionssystem auseinandergefahren werden und in einem nachfolgenden zweiten Schritt während und/oder nach der Inspektion durch das optische Inspektionssystem wieder zusammengefahren werden. Folglich wird also die Inspektion durchgeführt, wenn ein optischer Zugang zu den jeweiligen Behältern geschaffen wird. Die Inspektion kann wenigstens teilweise während des Auseinander- bzw. Zusammenfahrens erfolgen. Dadurch arbeitet das Inspektionsverfahren besonders effizient.

Die Greiferreihen können nach der Inspektion durch das optische Inspektionssystem zusammengefahren sein und die Behälter wieder in den Leergutkasten abgelegt werden. Dadurch können die Behälter in dem Leergutkasten nach der Inspektion zu weiteren Verarbeitungsschritten, insbesondere einer Sortiereinrichtung weitergefahren werden. Denkbar ist, dass Erkennungsdaten der Behälter von dem Inspektionsverfahren an die nachfolgende Sortiereinrichtung weitergeleitet werden.

Die Greiferreihen können nach der Inspektion durch das optische Inspektionssystem ganz oder teilweise auseinandergefahren oder ganz zusammengefahren sein, wobei die Behälter auf einem Flaschentisch abgelegt werden. Beispielsweise können die Behälter dadurch auf dem Flaschentisch bereits sortiert abgelegt werden.

Darüber hinaus stellt die Erfindung eine Flaschensortiermaschine zum Sortieren von in einem Leergutkasten angeordneten Behältern nach Anspruch 15 bereit.

Die Inspektionsvorrichtung der Flaschensortiermaschine kann die zuvor beschriebenen Merkmale in Bezug auf die Vorrichtung und/oder das Verfahren einzelne oder beliebige Kombinationen umfassen. Darüber hinaus kann die Flaschensortiermaschine zur Durchführung des Inspektionsverfahrens vorzugsweise nach einem der Ansprüche 7 - 14 ausgebildet sein.

Die Fördereinrichtung kann beispielsweise ein Förderband bzw. ein Linearförderer sein. Die Flaschensortiermaschine kann alternativ oder zusätzlich zur zweiten Fördereinrichtung einen Flaschentisch zum Abstellen und/oder Sortieren der Behälter umfassen.

Die Flaschensortiermaschine kann weiter einen Sortierroboter umfassen, wobei die Inspektionsvorrichtung zur Übermittlung von Inspektionsergebnissen mit dem Sortierroboter verbunden ist und wobei der Sortierroboter basierend auf den Inspektionsergebnissen zum Sortieren der Behälter in einer Sortiermatrix ausgebildet ist. Dadurch können die Inspektionsergebnisse unmittelbar dazu genutzt werden, den Sortierroboter zu steuern.

Der Sortierroboter kann einen gegenüber einer Sortiermatrix verfahrbaren Kopf umfassen, mit dem die Behälter von der Sortiermatrix aufgenommen und nach Behältertypen umgruppiert wieder abgestellt werden können. Dadurch können sortenreine Behältergruppen bereitgestellt werden. Denkbar ist, dass die Inspektionsvorrichtung in einen Kopf des Sortierroboters integriert ist. Vorzugsweise kann der Kopf der Inspektionsvorrichtung auch der Kopf des Sortierroboters sein, insbesondere wobei die vorangegangen beschriebene Transporteinrichtung zum Transport des Sortierroboters entlang der Transportrichtung ausgebildet ist.

Weitere Merkmale und Vorteile der Erfindung werden nachfolgend anhand der in den Figuren dargestellten Ausführungsbeispiele näher erläutert. Dabei zeigt:
- Fig. 1: ein Ausführungsbeispiel einer Inspektionsvorrichtung zur Inspektion von in einem Leergutkasten angeordneten Behältern in einer Draufsicht;
- Fig. 2A-2B: der Kopf mit den Greiferreihen nach dem Ausführungsbeispiel aus der Fig. 1 in einer perspektivischen Ansicht von schräg unten;
- Fig. 3: ein weiteres Ausführungsbeispiel einer Inspektionsvorrichtung zur Inspektion von in einem Leergutkasten angeordneten Behältern in einer Draufsicht;
- Fig. 4: ein weiteres Ausführungsbeispiel einer Inspektionsvorrichtung zur Inspektion von in einem Leergutkasten angeordneten Behältern in einer Draufsicht;
- Fig. 5: ein weiteres Ausführungsbeispiel einer Inspektionsvorrichtung zur Inspektion von in einem Leergutkasten angeordneten Behältern in einer Draufsicht;
- Fig. 6: ein weiteres Ausführungsbeispiel einer Inspektionsvorrichtung zur Inspektion von in einem Leergutkasten angeordneten Behältern in einer Draufsicht;
- Fig. 7: ein weiteres Ausführungsbeispiel einer Inspektionsvorrichtung zur Inspektion von in einem Leergutkasten angeordneten Behältern in einer Draufsicht;
- Fig. 8: ein Ausführungsbeispiel einer Flaschensortiermaschine in einer Draufsicht;
- Fig. 9: ein weiteres Ausführungsbeispiel einer Flaschensortiermaschine in einer Draufsicht;
- Fig. 10: ein weiteres Ausführungsbeispiel einer Flaschensortiermaschine in einer Draufsicht; und
- Fig. 11: ein Ausführungsbeispiel eines Inspektionsverfahrens zur Inspektion von in einem Leergutkasten angeordneten Behältern als Flussdiagramm.

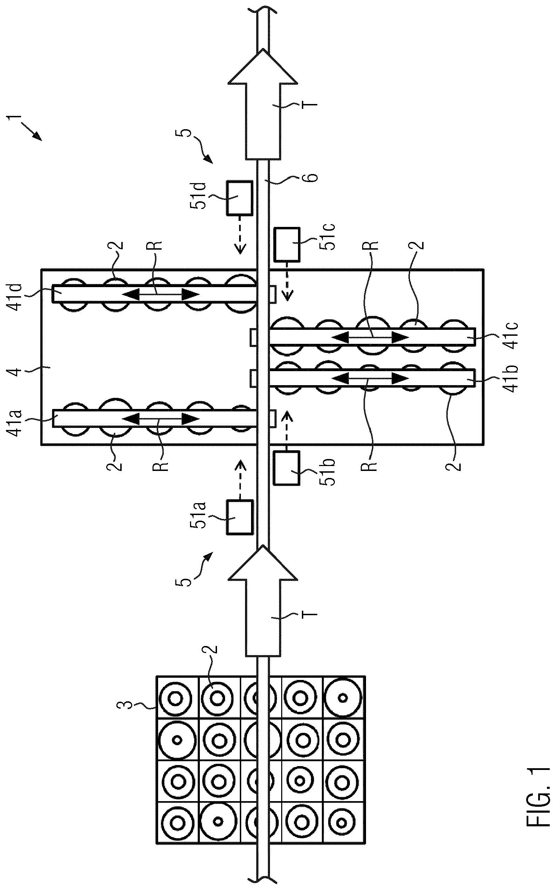

In der Fig. 1 ist ein erstes Ausführungsbeispiel einer Inspektionsvorrichtung 1 zur Inspektion von in einem Leergutkasten 3 angeordneten Behältern 2 in einer Draufsicht dargestellt. Zu sehen ist auf der linken Seite der Leergutkasten 3 mit Fächern, in dem mehrere verschiedenartige Behälter 2 als Leergut stehen. Darüber angeordnet ist der Kopf 4, der mittels der Transporteinrichtung 6 entlang der Transportrichtung T verfahrbar ausgebildet ist. Der Kopf weist mehrere Greiferreihen 41a - 41d mit daran angeordneten Greifern 42 auf, mit denen die Behälter 2 gegriffen und aus dem Leergutkasten 3 herausgenommen werden können.

Des Weiteren ist das optische Inspektionssystem 5 mit den Kameras 51a - 51d zu sehen, die jeweils einer Greiferreihe 41a - 41d zugeordnet sind. Mit den Kameras 51a - 51d können die Behälter 2 von der Seite her erfasst werden. Denkbar ist jedoch auch, dass die Behälter schräg von oben oder schräg von unten oder ganz von unten zusätzlich oder alternativ in beliebigen Kombinationen erfasst werden. Die Kameras 51a - 51d sind hier als Farbkameras ausgebildet, um Behältermerkmale des Behälter 2 wie die Seitenkontur und die Farbe zu erfassen. Denkbar sind jedoch auch beliebige andere Behältermerkmale, wie Etiketten, Embossings und dergleichen. Das optische Inspektionssystem 5 umfasst weiter ein hier nicht dargestelltes Bildverarbeitungssystem, mit dem die Kamerabilder bei der Inspektion hinsichtlich der Behältermerkmale ausgewertet werden. Dadurch kann automatisch der Behältertyp zugeordnet werden.

Des Weiteren ist zu sehen, dass die Greiferreihen 41a - 41d in Reihenlängsrichtung R gegeneinander verfahrbar ausgebildet sind, um einen optischen Zugang zu den jeweiligen Behälterreihen für das Inspektionssystem 5 zu schaffen. Die Greiferreihen 41a - 41d werden dazu einzeln oder in Gruppen mit Linearantrieben in Reihenlängsrichtung R verfahren. Die Linearantriebe können elektrisch, pneumatisch oder hydraulisch arbeiten.

Zu sehen ist ferner, dass die Greiferreihen 41a - 41d senkrecht zur Transportrichtung T der Transporteinrichtung 6 gegeneinander verfahrbar sind. Dadurch wird die Bewegung der Greiferreichen 41a - 41d von der Transportbewegung des Kopfs 4 weitgehend entkoppelt, wodurch besonders wenig Bewegungsunschärfe in den Kamerabildern entsteht und die Inspektion besonders zuverlässig ist. Ebenso können die Greiffereihen 41a - 41d schräg zur Transportrichtung gegeneinander verfahrbar sein.

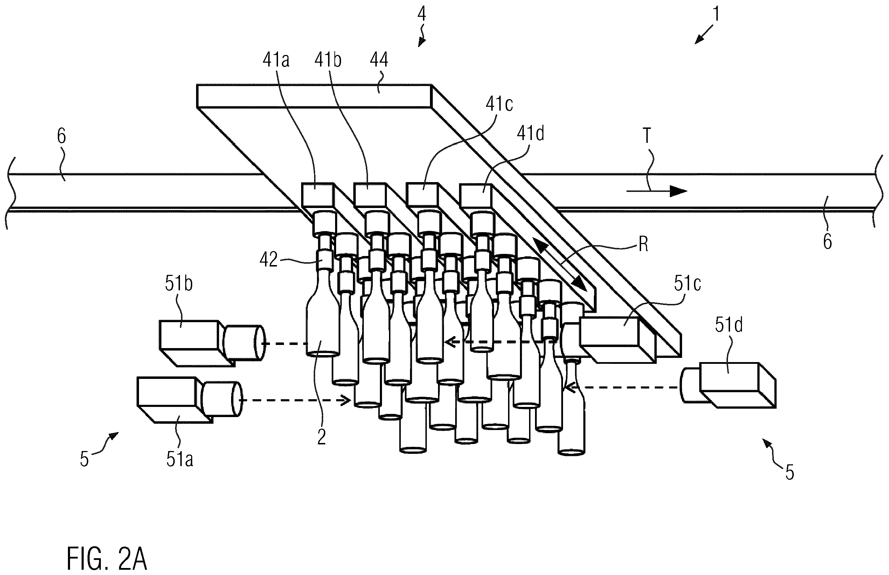

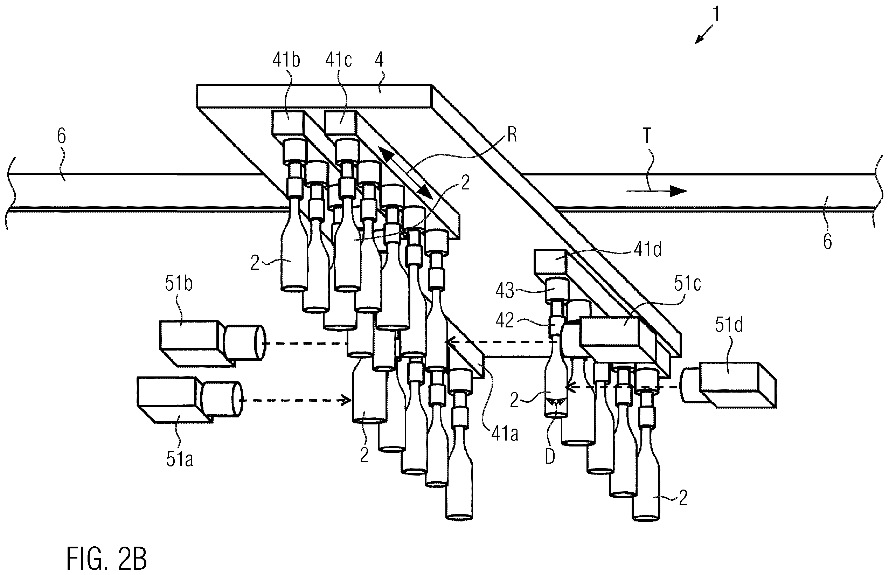

Der Kopf und die Inspektion werden nachfolgend anhand der Fig. 2A-2B näher erläutert. In der Fig. 2A ist ein Ausführungsbeispiel des Kopfs 4 der Inspektionsvorrichtung aus der Fig. 1 in einer perspektivischen Ansicht von schräg unten genauer dargestellt. Zu sehen ist, dass der Kopf 4 mit der Transporteinrichtung 6 entlang der Transportrichtung T verfahren wird. Der Kopf 4 besteht hier aus einer Trägerstruktur 44, wie einem Rahmen oder einer Platte, an dem die Greiferreihen 41a - 41d mit den Greifern 42 angeordnet sind. Diese sind in der Fig. 2A in einem dem Leergutkasten 3 der Fig. 1 entsprechenden Raster zusammengefahren. Folglich können die Behälter 2 an der Behältermündung mit den Greifern 42 aufgegriffen werden. Hierzu kann entweder der gesamte Kopf 4 oder die Greifer 42 jeweils einzeln zu den Behältern 2 hin abgesenkt werden, so dass die Behälter 2 gegriffen werden und aus dem Leergutkasten 3 herausgenommen werden.

Nach dem Herausnehmen sind die Behälter 2 auf der gesamten Höhe inklusive des Bodens zwar grundsätzlich zugänglich, jedoch ist das Blickfeld der Kameras 51b, 51c auf die innenliegenden Behälterreihen durch die außenliegenden Behälterreihen versperrt.

Um den optischen Zugang zu den jeweiligen Behälterreihen für das optische Inspektionssystem 5 zu schaffen, werden die Greiferreihen 41a - 41d in Reihenlängsrichtung R auseinandergefahren. Durch das Auseinanderfahren der beiden Greiferreihen 41a und 41b wird schrittweise das Blickfeld der Kamera 51b auf die Behälter der Greiferreihe 41b freigegeben. Zudem werden die Behälter 2 der Greiferreihe 41a schrittweise in das Blickfeld der Kamera 51a hineingefahren. Dementsprechend werden auch die beiden anderen Greiferreihen 41c und 41d in Reihenlängsrichtung R auseinandergefahren, wobei die Behälter 2 schrittweise in das Blickfeld der Kameras 51c und 51d hineingefahren werden. Folglich können die Behälter 2 mit den Kameras 51a - 51d seitlich besonders gut erfasst und inspiziert werden. Zur Inspektion werden die Greiferreihen 41a - 41d jeweils um wenigstens eine halbe Reihenlänge auseinandergefahren.

Die Kameras 51a - 51d sind hier über nicht dargestellte Tragarme mit dem Kopf 4 starr verbunden, so dass sie demgegenüber feststehend angeordnet sind. Folglich führt die Bewegung des Kopfs 4 entlang der Transportrichtung T zu keiner Relativbewegung zwischen den Behältern 2 und den Kameras 51a - 51d und eine Bewegungsunschärfe wird vermieden. Darüber hinaus ist zu sehen, dass die Greifer 42 mit den Antrieben 43 drehbar ausgebildet sind, um die Oberflächen der Behälter 2 in Behälterumfangsrichtung D an mehreren Stellen zu inspizieren. Beispielsweise werden die Behälter 2 beim Auseinanderfahren der Greiferreihen 41a - 41d so gedreht, dass jeweils eine Behälterseite der zugeordneten Kamera 51a - 51d zugewandt ist und beim Zusammenfahren die entsprechend Gegenüberliegende. Folglich können die Behälter 2 vollumfänglich inspiziert werden, ohne die Kameras 51a - 51d zu schwenken.

Nach der Inspektion werden die Greiferreihen 41a - 41d wieder zusammengefahren, so dass sie die Position wie in der Fig. 2A einnehmen. Die Behälter 2 können so von den Greifern 42 wieder in einem Leergutkasten 3 abgestellt werden. Ebenso ist denkbar, dass die Behälter 2 entsprechend dem Behältertyp auf einem oder mehreren Flaschentischen abgestellt werden. Bei letzterem können die Greiferreichen 41a - 41d ganz oder teilweise auseinandergefahren oder ganz zusammengefahren sein.

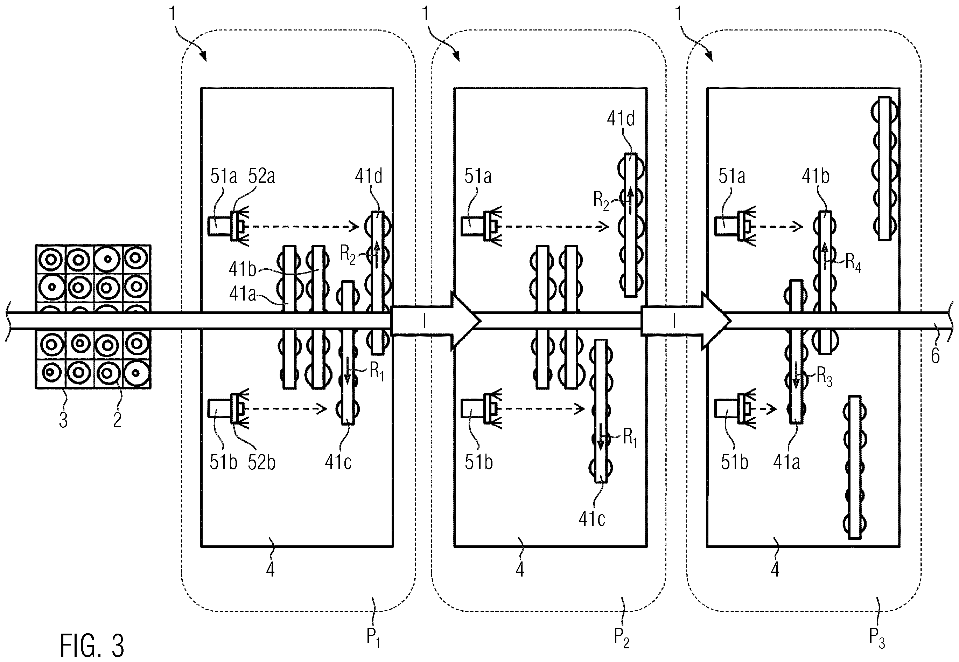

In der Fig. 3 ist ein weiteres Ausführungsbeispiel einer Inspektionsvorrichtung 1 zur Inspektion von in einem Leergutkasten 3 angeordneten Behältern 2 in einer Draufsicht zu sehen. Es unterscheidet sich von den Fig. 1 - 2B im Wesentlichen dadurch, dass das optische Inspektionssystem 5 lediglich zwei am Kopf 4 angeordnete Kameras 51a, 51b umfasst, mit denen jeweils die Behälter an zwei Greiferreihen 41a, 41c bzw. 41b, 41d inspiziert werden. Die Kameras 51a, 51b sind senkrecht auf die Verfahrbewegungen R₁ - R₄ der Greiferreihen 41a - 41d ausgerichtet. Die Inspektionsvorrichtung 1 nach dem Ausführungsbeispiel der Fig. 3 ist besonders dazu geeignet, mehr als vier Behälterreihen einfach zu inspizieren.

Ferner sind hier zusätzlich an den Kameras 51a, 51b die Ringlichter 52a, 52b als Beleuchtungseinrichtung zur Auflichtbeleuchtung der Behälter 2 zu sehen. Diese umfassen ringförmig um die Objektive der Kameras 51a, 51b angeordnete LEDs. Dadurch entsteht kein oder nur ein sehr geringer Schattenwurf. Diese Art der Auflichtbeleuchtung ist prinzipiell in allen dargestellten Ausführungsbeispielen denkbar.

Die Inspektionsvorrichtung 1 ist jeweils zu unterschiedlichen Zeitpunkten an den Positionen P₁, P₂, und P₃ beim Verfahren mit der Transporteinrichtung 6 entlang der Transportrichtung T gezeigt:
An der Position P₁ beginnen die Greiferreihen 41c und 41d gegeneinander in den Richtungen R₁ und R₂ auseinander zu fahren, so dass die äußeren Behälter 2 mit den Kameras 51a, 51b inspiziert werden. Die Greiferreihen 41c und 41d werden dann über die Position P₂ bis P₃ zunehmend weiter auseinander gefahren, bis jeder darin aufgenommene Behälter 2 ins Blickfeld der jeweiligen Kamera 51a, 51b gelangt und inspiziert wird. Anschließend werden in gleicher Art und Weise die zu den Kameras 51a, 51b näher angeordneten Greiferreihen 41a, 41b in den Richtungen R₃, R₄ auseinandergefahren und die damit aufgenommen Behälter inspiziert. Die Greiferreihen 41a - 41d werden zur Inspektion jeweils um ihre volle Länge auseinandergefahren.

Folglich müssen bei dem Ausführungsbeispiel nur zwei Kameras 51a, 51b in der Inspektionsvorrichtung 1 eingesetzt werden.

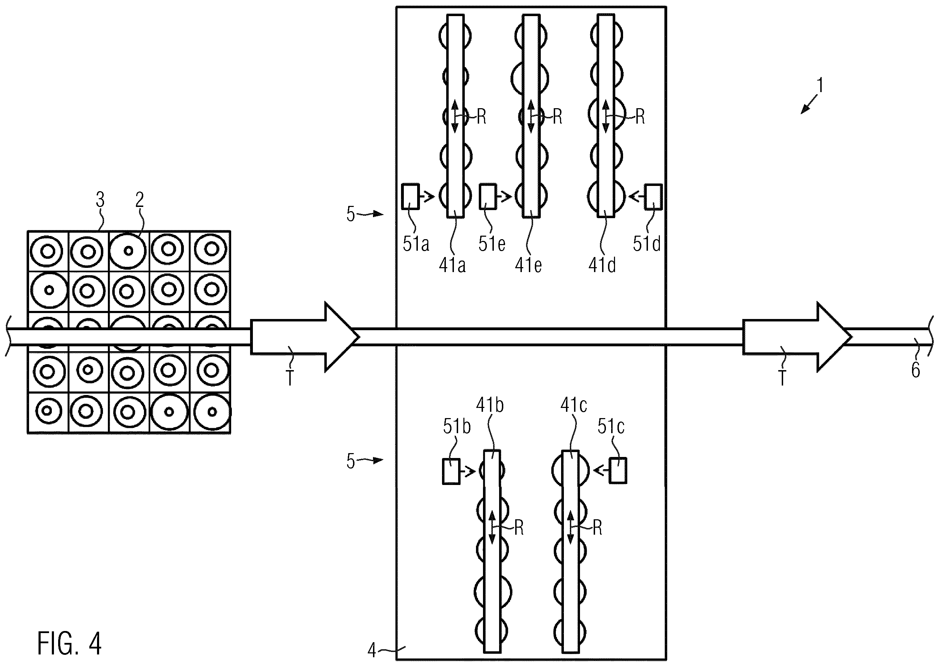

In der Fig. 4 ist ein weiteres Ausführungsbeispiel einer Inspektionsvorrichtung 1 zur Inspektion von in einem Leergutkasten 3 angeordneten Behältern 2 in einer Draufsicht zu sehen. Dieses Ausführungsbeispiel unterscheidet sich von den Fig. 1 - 2B im Wesentlichen dadurch, dass zwischen den beiden Greiferreihen 41a und 41d zusätzlich eine Greiferreihe 41e mit der zugeordneten Kamera 51e angeordnet sind. Dadurch ist es möglich, einen Leergutkasten mit fünf Behälterreihen zu inspizieren. Um einen optimale Beleuchtungssituation zu gewährleisten, sind die Kameras 51a - 51e weiter außen am Kopf 4 angeordnet und die Greiferreihen 41a - 41e werden wenigstens um eine volle Reihenlänge längs der Richtung R verfahren. Die Inspektionsvorrichtung 1 nach dem Ausführungsbeispiel der Fig. 4 ist besonders dazu geeignet, mehr als vier Behälterreihen einfach zu inspizieren.

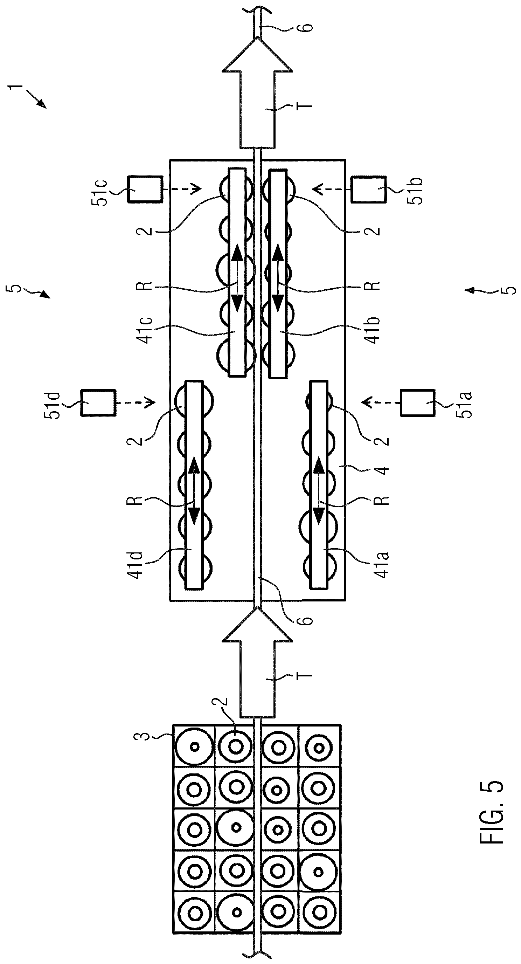

In der Fig. 5 ist ein weiteres Ausführungsbeispiel einer Inspektionsvorrichtung 1 zur Inspektion von in einem Leergutkasten 3 angeordneten Behältern 2 in einer Draufsicht zu sehen. Das Ausführungsbeispiel unterscheidet sich von den Fig. 1 - 2B im Wesentlichen dadurch, dass die Greiferreihen 41a - 41d am Kopf 4 längs zur Transportrichtung T der Transporteinrichtung 6 gegeneinander verfahrbar sind und dass die Kameras 51a - 51d stationär an der Inspektionsvorrichtung 1 angeordnet sind. Ansonsten weist die Inspektionsvorrichtung 1 die zuvor im Hinblick auf die Fig. 1 - 2B beschriebenen Merkmale auf.

Folglich können die Greiferreihen 41a - 41d längs der Transportrichtung T auseinandergefahren werden, so dass ein optischer Zugang für das optische Inspektionssystem 5 und damit für die Kameras 51a - 51d geschaffen wird. Dadurch können die Behälter 2 und die Kameras 51a - 51d von der Seite auf der gesamten Höhe erfasst werden. Denkbar ist jedoch auch, dass die Behälter 2 von schräg oben, schräg unten oder auch von unten zusätzlich oder alternativ oder in beliebigen Kombinationen erfasst werden.

Nach dem Auseinanderfahren der Greiferreihen 41a - 41d wird der Kopf 4 durch die Transporteinrichtung 6 weiter entlang der Transportrichtung T transportiert. Dadurch werden die auseinandergefahrenen Behälterreihen und damit die Behälter 2 einzeln in die Blickfelder der Kameras 51a - 51d gefahren, gedreht und dabei vollumfänglich inspiziert. Demnach erfolgt das Verfahren in das jeweilige Blickfeld der Kameras 51a - 51d durch die Transporteinrichtung 6. Denkbar ist jedoch auch, dass das Verfahren der Greiferreihen 41a - 41d mit der Transportbewegung der Transporteinrichtung 6 kombiniert genutzt wird.

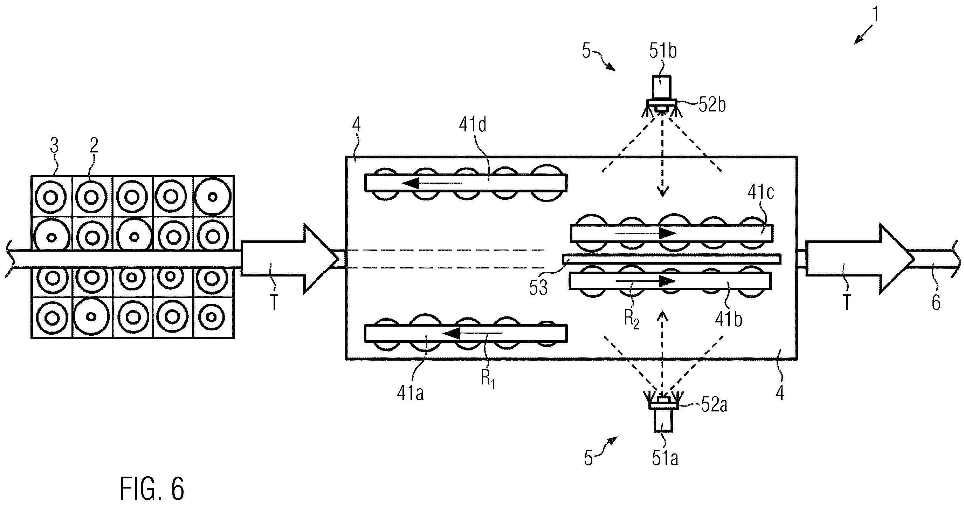

In der Fig. 6 ist ein weiteres Ausführungsbeispiel einer Inspektionsvorrichtung 1 zur Inspektion von in einem Leergutkasten 3 angeordneten Behältern 2 in einer Draufsicht zu sehen. Das Ausführungsbeispiel unterscheidet sich von dem in der Fig. 5 im Wesentlichen dadurch, dass hier die Greiferreihen 41a - 41d zunächst komplett auseinandergefahren werden, bevor die Inspektion mit den stationären Kameras 51a und 51b erfolgt. Dadurch ist es möglich mit nur zwei Kameras 51a, 51b auszukommen, die jeweils die Behälter 2 an zwei Greiferreihen 41a, 41b bzw. 41c, 41d inspizieren.

Zudem ist zu sehen, dass an den Kameras 51a, 51b die Ringlichter 52a, 52b mit LEDs ausgebildet sind, die als Beleuchtungseinrichtung zur Auflichtbeleuchtung dienen. Ferner ist zwischen den Greifereihen 41c und 41b eine Lichttafel 53 zu sehen, die als Beleuchtungseinrichtung zur Duchtlichtbeleuchtung dient. Diese ist stationär an der Inspektionsvorrichtung 1 angeordnet und kann als beidseitig abstrahlende LED- Lichtquelle ausgeführt sein. Somit dient die Lichttafel 53 gleichzeitig zur Beleuchtung bei der Bilderfassung mit den Kameras 51a, 51b. Fährt der Kopf 4 entlang der Transportrichtung T weiter, so ist die Lichttafel 53 dann zwischen den Greiferreihen 41a und 41d angeordnet.

Denkbar ist, dass die Aufnahmen mit den Kameras 51a, 51b gleichzeitig erfolgen. Bevorzugt erfolgen die Aufnahmen jedoch zeitversetzt, wobei die Ringlichter 52a, 52b und die Lichttafel 53 synchron mit der entsprechenden Kamera 51a, 51b ausgelöst werden.

Denkbar ist, dass die Lichttafel 53 auch bei dem zuvor in Fig. 5 beschriebenen Ausführungsbeispiel eingesetzt wird. Sie kann dort über die gesamte Länge der Greiferreihen 41a und 41b ausgebildet sein. Denkbar ist auch, dass zwei beidseitig abstrahlende Lichttafeln 53 jeweils zwischen den Kameras 51a, 5d bzw. 51b, 51c angeordnet sind.

Ferner ist denkbar, dass die Greiferreihen 41b und 41c bzw. 41a und 41d senkrecht auseinandergefahren werden, um Platz für die Lichttafel 53 zu schaffen.

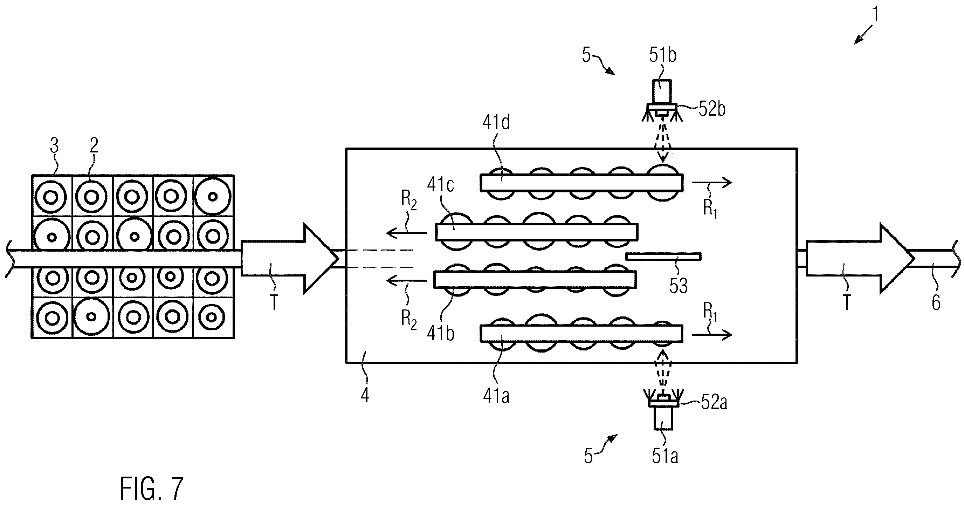

In der Fig. 7 ist ein weiteres Ausführungsbeispiel einer Inspektionsvorrichtung 1 zur Inspektion von in einem Leergutkasten 3 angeordneten Behältern 2 in einer Draufsicht zu sehen. Das Ausführungsbeispiel unterscheidet sich von dem in der Fig. 6 im Wesentlichen dadurch, dass die Inspektion bereits erfolgt, wenn die Greifferreihen 41a - 41d in den Richtungen R₁ und R₂ auseinandergefahren werden. Dabei wird mit den Kameras 51a, 51b jeweils nur ein Behälter erfasst, sobald er ins Gesichtsfeld einfährt. Nach dem Erfassen der beiden letzten Behälter der Greiferreihen 41a, 41d (in der Fig. 7 die linken Behälter) sind diese vollständig auseinandergefahren. Anschließend fahren die Greiferreihen 41b und 41c durch den Transport des Kopfs 4 mit der Transporteinrichtung 6 an den Kameras 51a, 51b vorbei und die darin aufgenommenen Behälter 2 werden ebenfalls erfasst. Das zuvor beschriebene Verfahren der Greiferreihen 41a - 41d erfolgt also während des Transports mit der Transporteinrichtung 6.

Denkbar bei den zuvor in Bezug auf die Fig. 1 - 7 dargestellten Ausführungsbeispielen ist, dass die Kameras 51a - 51d jeweils nur einen, mehrere oder alle Behälter 2 an einer Greiferreihe 41a - 41d gleichzeitig erfasst.

Dadurch, dass in den Ausführungsbeispielen der Fig. 1 - 7 die Greiferreihen 41a - 41d in Reihenlängsrichtung R gegeneinander verfahrbar ausgebildet sind, kann besonders einfach ein optischer Zugang zu den jeweiligen Behälterreihen für das Inspektionssystem 5 geschaffen werden. Dadurch werden die Behälter 2 mit den Kameras 51a - 51d aus einer besonders günstigen Blickrichtung erfasst. Folglich ist die Inspektion besonders zuverlässig. Ferner können die Greiferreihen 41a - 41d ohne hohen Aufwand, beispielsweise mit Linearantrieben verfahren werden.

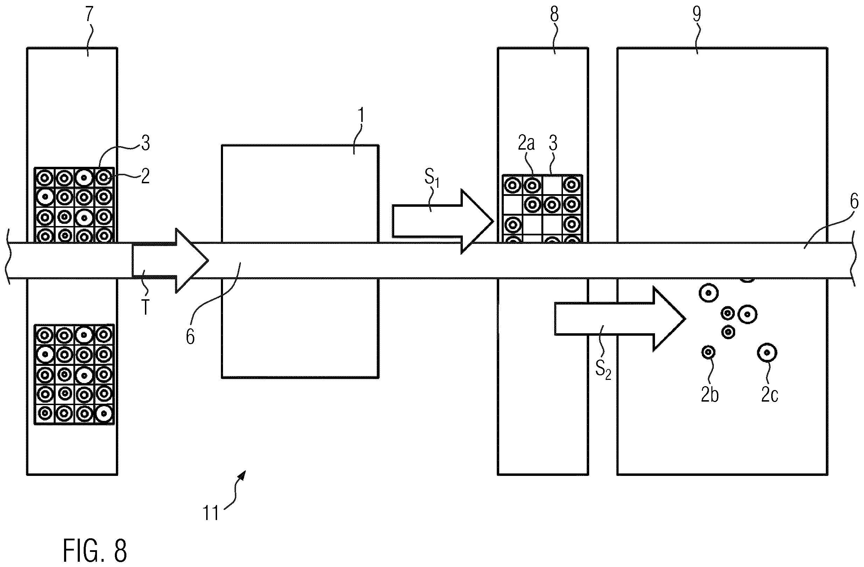

In der Fig. 8 ist ein Ausführungsbeispiel einer Flaschensortiermaschine 11 zum Sortieren von in Leergutkästen 3 angeordneten Behältern 2 in einer Draufsicht dargestellt. Zu sehen ist eine erste Fördereinrichtung 7, beispielsweise ein Förderband, um der Inspektionsvorrichtung 1 die Leergutkästen 3 mit den unsortierten Behältern 2 zuzuführen. Die Inspektionsvorrichtung 1 kann nach einem der Ausführungsbeispiele der Fig. 1 - 7 ausgeführt sein. Bevorzugt arbeitet die Inspektionsvorrichtung 1 dabei reversierend.

Zunächst wird der Kopf mit den daran in Greiferreihen angeordneten Greifern über die Leergutkästen 3 verfahren und die Behälter 2 aus dem Leergutkasten herausgenommen. Anschließend wird der Kopf mit der Transporteinrichtung 6 in Transportrichtung T transportiert und die Behälter 2 mit der Inspektionsvorrichtung 1 inspiziert. Als Ergebnis der Inspektion ist dann bekannt, welcher Flaschentyp mit dem jeweiligen Greifer aufgegriffen wurde. Anschließend wird der Kopf weiter in Richtung S₁ verfahren und die Behälter 2a eines ersten Typs in einem leeren Leergutkasten 3 auf der zweiten Fördereinrichtung 8 abgesetzt. Die anderen Behälter 2b, 2c eines zweiten und dritten Typs werden mit dem Kopf und der Transporteinrichtung 6 weiter in Richtung S₂ zum Flaschentisch 9 transportiert, wo diese dann manuell oder automatisch sortiert werden können.

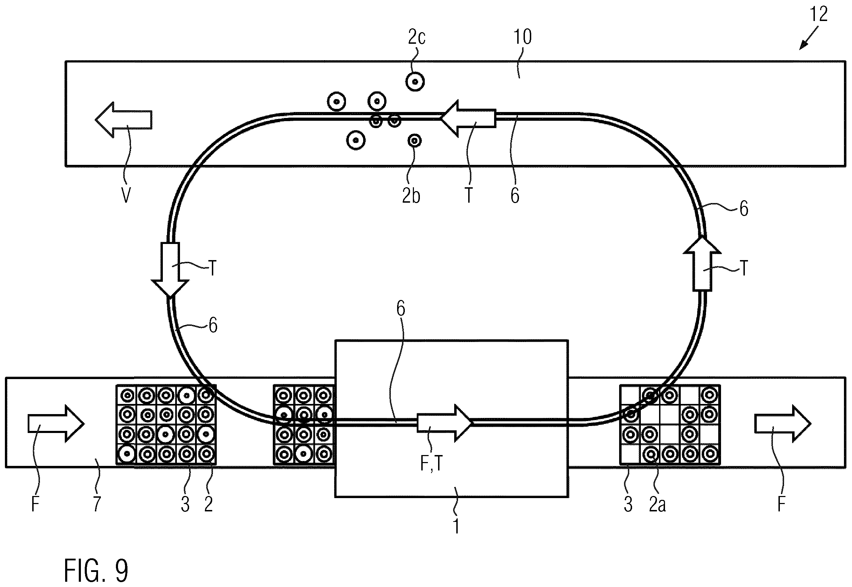

In der Fig. 9 ist ein weiteres Ausführungsbeispiel einer Flaschensortiermaschine 12 in einer Draufsicht dargestellt. Dies unterscheidet sich von dem Ausführungsbeispiel in der Fig. 8 im Wesentlichen dadurch, dass der Kopf der Inspektionsvorrichtung 1 mit der Transporteinrichtung 6 umlaufend entlang der Transportrichtung T transportiert wird. Die Leergutkästen 3 mit den unsortierten Behältern 2 werden zunächst mit der ersten Fördereinrichtung 7 zur Inspektionsvorrichtung 1 transportiert, wobei deren Kopf durch die Transporteinrichtung 6 synchron mit der Förderbewegung der Leergutkästen 3 verfahren wird. Dabei werden die Behälter 2 aus den Leergutkästen 3 herausgenommen, mit der Inspektionsvorrichtung 1 inspiziert und die Behälter 2a eines ersten Typs wieder in den Leergutkasten 3 zurückgesetzt. Dieser Leergutkasten 3 mit den Behältern 2a wird dann in Förderrichtung F weiter transportiert. Der Kopf der Inspektionsvorrichtung 1 wird anschließend weiter in Umlaufrichtung T zur zweiten Fördereinrichtung 10 transportiert, auf dem die restlichen Behälter 2b, 2c eines zweiten und dritten Typs abgestellt werden. Diese werden dann in Förderrichtung V weitertransportiert und sortiert.

Anschließend wird der Kopf mit der Transporteinrichtung 6 in Transportrichtung T zur Ausgangsposition über der ersten Fördereinrichtung 7 weitertransportiert und greift Behälter 2 eines weiteren Leergutkastens 3 auf.

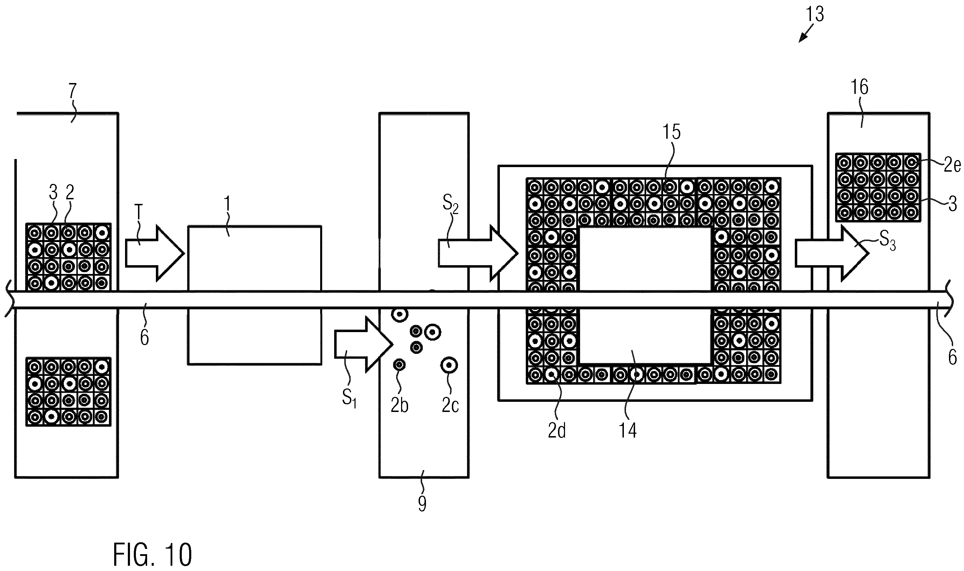

In der Fig. 10 ist ein weiteres Ausführungsbeispiel der Flaschensortiermaschine 13 in einer Draufsicht dargestellt. Dies unterscheidet sich vom Ausführungsbeispiel in der Fig 8 im Wesentlichen dadurch, dass die Flaschensortiermaschine 13 einen Sortierroboter 14 umfasst, der basierend auf den Inspektionsergebnissen der Inspektionsvorrichtung 1 die Behälter 2d in der Sortiermatrix 15 sortiert.

Die Transporteinrichtung 6 wird hier sowohl von der Inspektionseinrichtung 1 als auch vom Sortierroboter 14 genutzt. Denkbar ist jedoch auch, dass dafür zwei getrennte Transporteinrichtungen vorhanden sind, vorzugsweise wobei die erste Transporteinrichtung die Inspektionseinrichtung 1 zwischen der Fördereinrichtung 7 und der Sortiermatrix 15 verfährt und die zweite Transporteinrichtung den Sortierroboter 14 zwischen der Sortiermatrix 15 und der Fördereinrichtung 16.

Zudem umfasst die Flaschensortiermaschine 13 zwei weitere hier nicht dargestellte Verfahreinheiten, die die Inspektionsvorrichtung 1 bzw. den Sortierroboter 14 senkrecht zur Transportrichtung T verfahren, um alle Bereich der Sortiermatrix 15 zu erreichen.

Zudem arbeiten die Inspektionsvorrichtung 1 und der Sortierroboter 14 bevorzugt reversierend.

Als Ergebnis der Inspektion mit der Inspektionsvorrichtung 1 ist bekannt, welcher Flaschentyp mit dem jeweiligen Greifer aufgegriffen wurde. Anschließend wird der Kopf weiter in Richtung S₁ verfahren und die Behälter 2b, 2c des zweiten und dritten Typs auf dem Flaschentisch 9 abgesetzt. Beispielsweise zur manuellen Sortierung.

Alle weiteren Behälter 2d bestehend aus verschiedenen Behältertypen werden in Richtung S₂ weiter zur Sortiermatrix 15 verfahren und dort mit dem Kopf der Inspektionsvorrichtung 1 abgesetzt. Dort werden die Behälter 2d mit dem Sortierroboter 14 basierend auf den mit der Inspektionsvorrichtung ermittelten Flaschentypen sortiert und in Behältergruppen mit gleichem Typ gruppiert. Anschließend werden die sortierten Behälter 2e mit dem Sortierroboter 14 in Richtung S₃ verfahren und mit einem Typ pro Leergutkasten 3 auf der Fördereinrichtung 16 abgesetzt.

Denkbar ist auch, dass bei dem Ausführungsbeispiel der Fig. 10 der Kopf der Inspektionsvorrichtung in den Kopf des Sortierroboters 14 integriert ist.

Denkbar ist bei den Flaschensortiermaschinen 11, 12, 13 in den Fig. 8-10, dass an wenigstens einer Transporteinrichtung mehrere Köpfe bzw. Inspektionsvorrichtungen angeordnet sind. Dadurch kann der Durchsatz weiter erhöht werden. Denkbar ist auch, dass an der Transporteinrichtung 6 der Sortierroboter 14 angegliedert ist.

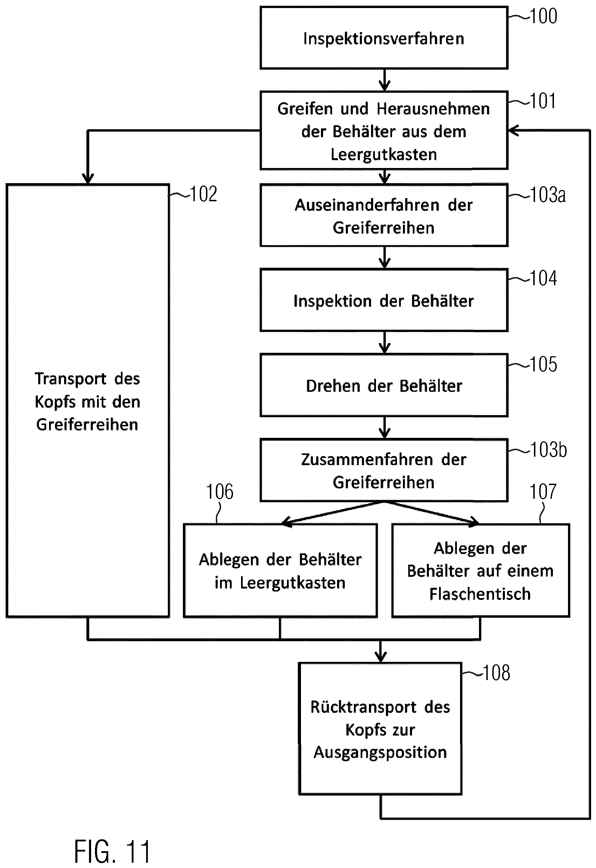

In der Fig. 11 ist ein Ausführungsbeispiel eines Inspektionsverfahrens 100 zur Inspektion von in einem Leergutkasten angeordneten Behältern als Flussdiagramm dargestellt. Zunächst werden die Behälter im Schritt 101 mit einem Kopf und daran in mehreren Greiferreihen angeordneten Greifern gegriffen und aus dem Leergutkasten herausgenommen. Anschließend werden im Schritt 103a die Greiferreihen in Reihenlängsrichtung gegeneinander auseinandergefahren, so dass ein optischer Zugang zu den jeweiligen Behälterreihen für das optische Inspektionssystem geschaffen wird. Im Schritt 104 folgt dann die Inspektion der Behälter mit dem optischen Inspektionssystem, wobei die Behälter besonders gut bezüglich der Seitenkontur erfasst werden können. Denkbar ist auch, dass die Behälter von schräg oben, schräg unten und/oder von unten erfasst werden. Bei der Inspektion werden die Behälter gemäß Schritt 105 gedreht, so dass verschiedene Behälterseiten durch das Inspektionssystem erfasst und inspiziert werden können.

In dem nachfolgenden Schritt 103b werden die Behälterreihen wieder zusammengefahren, und die Behälter jeweils im Schritt 106 / 107 je nach Behältertyp entweder in einem Leergutkasten oder auf einem Flaschentisch abgelegt.

Parallel zu den Schritten 103a - 107, bzw. optional auch zum Schritt 101 wird der Kopf mit den Greiferreihen im Schritt 102 mit einer Transporteinrichtung entlang einer Transportrichtung verfahren.

Im Schritt 108 erfolgt dann der Rücktransport des Kopfs zur Ausgangsposition über einen weiteren Leergutkasten mit unsortierten Behältern und das Verfahren beginnt von vorne.

Da die Greiferreihen bei dem Inspektionsverfahren in Reihenlängsrichtung gegeneinander verfahren werden, ist es besonders einfach und ohne hohen Aufwand möglich, einen optischen Zugang für das Inspektionssystem zu den jeweiligen Behälterreihen zu schaffen. Dadurch können die Behälter besonders günstig von der Seite her inspiziert werden, wobei Behältermerkmale wie die Seitenkontur und die Farbe besonders gut erkannt werden. Dadurch kann eine besonders zuverlässige Zuordnung der Behälter zu einem bestimmten Typ erfolgen und darauf basierend die Sortierung gesteuert werden.

Das Verfahren in der Fig. 11 kann in den zuvor beschriebenen Ausführungsbeispielen der Fig. 1 - 10 eingesetzt werden.

## Patentansprüche

1. Inspektionsvorrichtung (1) zur Inspektion von in einem Leergutkasten (3) angeordneten Behältern (2), wobei die Leergutkästen dazu vorgesehen sind, die Behälter als Leergut zu einer Wiederverwertung zurück zu transportieren, umfassend
einen Kopf (4) mit in mehreren Greiferreihen (41a - 41d) angeordneten Greifern (42), um die Behälter (2) zu greifen und aus dem Leergutkasten (3) herauszunehmen, und
mit einem optischen Inspektionssystem (5) zur Inspektion der mit den Greifern (42) aus dem Leergutkasten (3) herausgefahrenen Behälter (2),
**dadurch gekennzeichnet, dass**
die Greiferreihen (41a - 41d) in Reihenlängsrichtung (R) gegeneinander verfahrbar ausgebildet sind, um einen optischen Zugang zu den jeweiligen Behälterreihen für das Inspektionssystem (5) zu schaffen.

2. Inspektionsvorrichtung (1) nach Anspruch 1, wobei das optische Inspektionssystem (5) mehrere Kameras (51a - 51d) umfasst, die vorzugsweise jeweils einer Greiferreihe (41a - 41d) zugeordnet sind.

3. Inspektionsvorrichtung (1) nach Anspruch 1 oder 2, wobei der Kopf (4) mittels einer Transporteinrichtung (6) entlang einer Transportrichtung (T) verfahrbar ausgebildet ist.

4. Inspektionsvorrichtung (1) nach Anspruch 3, wobei die Greiferreihen (41a - 41d) schräg, vorzugsweise senkrecht zur Transportrichtung (T) gegeneinander verfahrbar ausgebildet sind, insbesondere wobei die Kameras (51a - 51d) am Kopf (4) angeordnet sind.

5. Inspektionsvorrichtung (1) nach Anspruch 3, wobei die Greiferreihen (41a - 41d) längs zur Transportrichtung (T) gegeneinander verfahrbar ausgebildet sind, insbesondere wobei die Kameras (51a - 51d) an der Inspektionsvorrichtung (1) stationär oder am Kopf (4) angeordnet sind.

6. Inspektionsvorrichtung (1) nach einem der Ansprüche 1 - 5, wobei die Greifer (42) drehbar ausgebildet sind, um die Oberflächen der Behälter (2) in Behälterumfangrichtung an mehreren Stellen zu inspizieren.

7. Inspektionsverfahren (100) zur Inspektion von in einem Leergutkasten angeordneten Behältern, wobei die Leergutkästen dazu vorgesehen sind, die Behälter als Leergut zu einer Wiederverwertung zurück zu transportieren, wobei die Behälter mit einem Kopf und daran in mehreren Greiferreichen angeordneten Greifern gegriffen und aus dem Leergutkasten herausgenommen werden (101), und wobei die mit den Greifern aus dem Leergutkasten herausgenommenen Behälter mit einem optischen Inspektionssystem inspiziert werden (104),
**dadurch gekennzeichnet, dass**
die Greiferreihen in Reihenlängsrichtung gegeneinander verfahren werden (103) und dadurch für das Inspektionssystem ein optischer Zugang zu den jeweiligen Behälterreihen geschaffen wird.

8. Inspektionsverfahren (100) nach Anspruch 7, wobei eine Transporteinrichtung den Kopf entlang einer Transportrichtung verfährt (102) und die Greiferreihen längs, schräg oder senkrecht zur Transportrichtung des Kopfs gegeneinander verfahren werden (103), vorzugsweise wobei die Greiferreihen während der Verfahrbewegung des Kopfs gegeneinander verfahren werden.

9. Inspektionsverfahren (100) nach Anspruch 7 oder 8, wobei die Behälter zur Inspektion einzeln oder in Gruppen mit der jeweiligen Greiferreihe in das Blickfeld wenigstens einer Kamera gefahren werden.

10. Inspektionsverfahren (100) nach einem der Ansprüche 7 - 9, wobei die Greifer jeweils bei der Inspektion gedreht werden (105), und wobei die Oberfläche der Behälter in Behälterumfangrichtung an mehreren Stellen inspiziert wird.

11. Inspektionsverfahren (100) nach Anspruch 10, wobei die Greifereihen gegeneinander auseinander- und dann wieder zusammengefahren werden und die Greifer damit korrespondierend so gedreht werden, dass jeweils unterschiedliche Behälterseiten inspiziert werden.

12. Inspektionsverfahren (100) nach einem der Ansprüche 7 - 11, wobei die Greiferreihen nach dem Herausnehmen der Behälter aus dem Leergutkasten in einem ersten Schritt (103a) vor und/oder während der Inspektion durch das optische Inspektionssystem auseinandergefahren werden und in einem nachfolgenden zweiten Schritt (103b) während und/oder nach der Inspektion durch das optische Inspektionssystem wieder zusammengefahren werden.

13. Inspektionsverfahren (100) nach einem der Ansprüche 7 - 12, wobei die Greiferreihen nach der Inspektion durch das optische Inspektionssystem zusammengefahren sind und die Behälter wieder in den Leergutkasten abgelegt werden (106).

14. Inspektionsverfahren (100) nach einem der Ansprüche 7 - 13, wobei die Greiferreihen nach der Inspektion durch das optische Inspektionssystem ganz oder teilweise auseinandergefahren oder ganz zusammengefahren sind und die Behälter auf einem Flaschentisch abgelegt werden (107).

15. Flaschensortiermaschine (11, 12) zum Sortieren von in einem Leergutkasten (3) angeordneten Behältern (2) , mit einer Inspektionsvorrichtung (1) nach einem der Ansprüche 1 - 6, mit einer ersten Fördereinrichtung (7) zum Zuführung des Leergutkastens (3) an die Inspektionsvorrichtung (1) und mit wenigstens einer zweiten Fördereinrichtung (8 - 10) zum Abführen des Leergutkastens (3) und/oder der Behälter (2) von der Inspektionsvorrichtung (1).

16. Flaschensortiermaschine (13) nach Anspruch 15, wobei die Flaschensortiermaschine (13) weiter einen Sortierroboter (14) umfasst, wobei die Inspektionsvorrichtung (1) zur Übermittlung von Inspektionsergebnissen mit dem Sortierroboter (14) verbunden ist und wobei der Sortierroboter (14) basierend auf den Inspektionsergebnissen zum Sortieren der Behälter (2d) in einer Sortiermatrix (15) ausgebildet ist.

17. Flaschensortiermaschine (13) nach Anspruch 16, wobei die Inspektionsvorrichtung (1) in einen Kopf des Sortierroboters (14) integriert ist.

## Claims

1. Inspection device (1) for inspecting containers (2) located in a crate (3) for empty containers, wherein the crates are provided in order to transport the containers as empties back for re-use, comprising
a head (4) with grippers (42) arranged in several gripper rows (41a - 41d), in order to grip the containers (2) and take them out of the crate (3) for empty containers, and
with an optical inspection system (5) for inspecting the containers (2) that are moved out of the crate (3) with the grippers (42),
**characterised in that**
the gripper rows (41a - 41d) are designed to be movable relative to one another in the longitudinal direction (R) of the rows, in order to allow the inspection system (5) to have optical access to the respective rows of containers.

2. Inspection device (1) according to claim 1, wherein the optical inspection system (5) comprises several cameras (51a - 51d) which are preferably respectively assigned to a gripper row (41a - 41d).

3. Inspection device (1) according to claim 1 or 2, wherein the head (4) is designed to be capable of being moved along a direction of transportation (T) by means of a conveyor device (6).

4. Inspection device (1) according to claim 3, wherein the gripper rows (41a - 41d) are designed to be obliquely movable relative to one another, preferably perpendicular to the direction of transportation (T), in particular with the cameras (51a - 51d) being arranged on the head (4).

5. Inspection device (1) according to claim 3, wherein the gripper rows (41a - 41d) are designed to be movable relative to one another, longitudinally to the direction of transportation (T), in particular with the cameras (51a - 51d) being arranged stationary on the inspection device (1) or on the head (4).

6. Inspection device (1) according to one of the claims 1 - 5, wherein the grippers (42) are designed to be rotatable in order to inspect the surfaces of the containers (2) at several points in the circumferential direction.

7. Inspection method (100) for inspecting containers arranged in a crate for empties, wherein the crates are envisaged for transporting the containers as empties back for re-use, wherein the containers are gripped with a head and grippers arranged thereon in several rows of grippers, and are taken out (101) of the crate, and wherein the containers that are taken out of the crate with the grippers are inspected (104) with an optical inspection system,
**characterised in that**
the gripper rows are moved relative to one another in the longitudinal direction of the rows (103), thereby creating optical access to the respective container rows for the inspection system.

8. Inspection method (100) according to claim 7, wherein a conveyor device moves the head along a direction of transportation (102) and the gripper rows are moved relative to one another longitudinally, obliquely or perpendicular to the direction of transportation of the head (103), preferably with the gripper rows being moved relative to one another during the travel movement of the head.

9. Inspection method (100) according to claim 7 or 8, wherein for inspection, the containers are moved individually or in groups with the respective gripper row into the field of view of at least one camera.

10. Inspection method (100) according to one of the claims 7 - 9, wherein the grippers are respectively rotated (105) during the inspection, and wherein the surface of the containers is inspected at several points in the circumferential direction of the containers.

11. Inspection method (100) according to claim 10, wherein the gripper rows are moved relative to one another, apart from one another and then towards one another again, and the grippers are thus correspondingly rotated so that in each case different sides of the containers are inspected.

12. Inspection method (100) according to one of the claims 7 - 11, wherein after the containers have been taken out of the crate, in a first step (103a) before and/or during the inspection by the optical inspection system, the gripper rows are moved apart from one another, and in a subsequent second step (103b) during and/or after inspection by the optical inspection system, they are moved together again.

13. Inspection method (100) according to one of the claims 7 - 12, wherein after inspection by the optical inspection system, the gripper rows are moved together and the containers are put back in the crate (106).

14. Inspection method (100) according to one of the claims 7 - 13, wherein after inspection by the optical inspection system, the gripper rows are wholly or partly moved apart from one another or wholly moved together and the containers are deposited on a bottle table (107).

15. Bottle sorting machine (11, 12) for sorting containers (2) arranged in a crate (3) for empties, with an inspection device (1) according to one of the claims 1 - 6, with a first conveyor device (7) for feeding the crate (3) to the inspection device (1), and with at least one second conveyor device (8 - 10) for carrying the crate (3) and/or the containers (2) away from the inspection device (1).

16. Bottle sorting machine (13) according to claim 15, wherein the bottle sorting machine (13) further comprises a sorting robot (14), wherein the inspection device (1) is connected to the sorting robot (14) for the transmission of inspection results, and wherein the sorting robot (14) , based on the inspection results, is designed to sort the containers (2d) in a sorting matrix (15).

17. Bottle sorting machine (13) according to claim 16, wherein the inspection device (1) is integrated into a head of the sorting robot (14).

## Revendications

1. Dispositif d'inspection (1) pour l'inspection de récipients (2) agencés dans une caisse d'articles consignés(3), dans lequel les caisses d'articles consignés sont prévues pour transporter les récipients en tant qu'articles consignés vers un recyclage, comprenant
une tête (4) avec des pinces (42) agencées en plusieurs rangées de pinces (41a-41d) pour saisir les récipients (2) et les retirer de la caisse d'articles consignés (3), et avec un système d'inspection optique (5) pour l'inspection des récipients (2) sortis de la caisse d'articles consignés (3) à l'aide des pinces (42),
**caractérisé en ce que**
les rangées de pinces (41a-41d) sont conçues pour pouvoir se déplacer les unes par rapport aux autres dans la direction longitudinale (R) des rangées afin de créer un accès optique aux rangées de récipients respectives pour le système d'inspection (5).

2. Dispositif d'inspection (1) selon la revendication 1, dans lequel le système d'inspection optique (5) comprend plusieurs caméras (51a à 51d), de préférence associées chacune à une rangée de pinces (41a à 41d).

3. Dispositif d'inspection (1) selon la revendication 1 ou 2, dans lequel la tête (4) est conçue de manière à pouvoir se déplacer le long d'une direction de transport (T) au moyen d'un dispositif de transport (6).

4. Dispositif d'inspection (1) selon la revendication 3, dans lequel les rangées de pinces (41a à 41d) sont réalisées de manière à pouvoir se déplacer les unes par rapport aux autres de manière oblique, de préférence perpendiculairement à la direction de transport (T), en particulier dans lequel les caméras (51a à 51d) sont agencées au niveau de la tête (4).

5. Dispositif d'inspection (1) selon la revendication 3, dans lequel les rangées de pinces (41a à 41d) sont conçues de manière à pouvoir se déplacer les unes par rapport aux autres dans la direction de transport (T), en particulier dans lequel les caméras (51a à 51d) sont agencées de manière stationnaire au niveau du dispositif d'inspection (1) ou de la tête (4).

6. Dispositif d'inspection (1) selon l'une quelconque des revendications 1 à 5, dans lequel les pinces (42) sont conçues de manière rotative pour inspecter les surfaces des récipients (2) dans la direction circonférentielle des récipients à plusieurs endroits.

7. Procédé d'inspection (100) pour une inspection de récipients agencés dans une caisse d'articles consignés, dans lequel les caisses d'articles consignés sont prévues pour le transport des récipients en tant qu'articles consignés vers un recyclage, dans lequel les récipients sont saisis avec une tête et des pinces agencées en plusieurs rangées de pinces et retirés de la caisse d'articles consignés (101), et dans lequel les récipients sorties de la caisse d'articles consignés à l'aide des pinces sont inspectés à l'aide d'un système d'inspection optique (104),
**caractérisé en ce que**
les rangées de pinces sont déplacées les unes par rapport aux autres dans la direction longitudinale des rangées (103) et un accès optique aux rangées de récipients respectives est ainsi créé pour le système d'inspection.

8. Procédé d'inspection (100) selon la revendication 7, dans lequel un dispositif de transport déplace (102) la tête le long d'une direction de transport et les rangées de pinces sont déplacées (103) les unes par rapport aux autres longitudinalement, obliquement ou perpendiculairement à la direction de transport de la tête, de préférence dans lequel les rangées de pinces sont déplacées les unes par rapport aux autres pendant le déplacement de la tête.

9. Procédé d'inspection (100) selon la revendication 7 ou 8, dans lequel les récipients sont déplacés dans le champ de vision d'au moins une caméra pour une inspection individuelle ou par groupes avec la rangée de pinces respective.

10. Procédé d'inspection (100) selon l'une quelconque des revendications 7 à 9, dans lequel les pinces sont tournées (105) respectivement lors de l'inspection, et dans lequel la surface des récipients est inspectée dans la direction circonférentielle des récipients en plusieurs endroits.

11. Procédé d'inspection (100) selon la revendication 10, dans lequel les rangées de pinces sont écartées les unes des autres puis à nouveau rapprochées les unes des autres et les pinces sont tournées de manière correspondante de telle sorte que des côtés de récipients différents soient inspectés respectivement.

12. Procédé d'inspection (100) selon l'une quelconque des revendications 7 à 11, dans lequel les rangées de pinces sont écartées après le retrait des récipients à partir de la caisse d'articles consignés dans une première étape (103a) avant et/ou pendant l'inspection par le système d'inspection optique et sont à nouveau rapprochées dans une seconde étape (103b) suivante pendant et/ou après l'inspection par le système d'inspection optique.

13. Procédé d'inspection (100) selon l'une quelconque des revendications 7 à 12, dans lequel les rangées de pinces sont rapprochées après l'inspection par le système d'inspection optique et les récipients sont à nouveau déposés (106) dans la caisse d'articles consignés.

14. Procédé d'inspection (100) selon l'une quelconque des revendications 7 à 13, dans lequel, après l'inspection par le système d'inspection optique, les rangées de pinces sont totalement ou partiellement écartées ou complètement rapprochées et les récipients sont déposés (107) sur une table à récipients.

15. Machine de tri de récipients (11, 12) pour le tri de récipients (2) agencés dans une caisse d'articles consignés (3), avec un dispositif d'inspection (1) selon l'une des revendications 1 à 6, avec un premier dispositif de transport pour amener la caisse d'articles consignés (3) au niveau du dispositif d'inspection (1) et avec au moins un second dispositif de transport (8 à 10) pour l'évacuation de la caisse d'articles consignés (3) et/ou des récipients (2) à partir du dispositif d'inspection (1).

16. Machine de tri de récipients (13) selon la revendication 15, dans laquelle la machine de tri de récipients (13) comprend en outre un robot de tri (14), dans laquelle le dispositif d'inspection (1) est connecté au robot de tri (14) pour transmettre des résultats d'inspection, et dans laquelle le robot de tri (14) est réalisé pour, sur la base des résultats d'inspection, trier les récipients (2d) dans une matrice de tri (15).

17. Machine de tri de récipients (13) selon la revendication 16, dans laquelle le dispositif d'inspection (1) est intégré dans une tête du robot de tri (14).
